# EUROPÄISCHE PATENTSCHRIFT

(11) **EP 3 710 196 B1**
(45) Veröffentlichungstag und Bekanntmachung des Hinweises auf die Patenterteilung: **05.01.2022**
(21) Anmeldenummer: 18789601.4
(22) Anmeldetag: 17.10.2018
(51) Int. Cl.: B23K 26/03, B23K 26/082, B23K 26/044

(54) **LASERBEARBEITUNGSSYSTEM UND VERFAHREN ZUR LASERBEARBEITUNG**
LASER MACHINING SYSTEM AND METHOD FOR LASER MACHINING
SYSTÈME D'USINAGE AU LASER ET PROCÉDÉ D'USINAGE AU LASER

(30) Priorität: 15.11.2017 DE 102017126867
(43) Veröffentlichungstag der Anmeldung: 23.09.2020
(73) Patentinhaber: Precitec GmbH & Co. KG, 76571 Gaggenau (DE)
(72) Erfinder: STREBEL, Matthias, 76571 Gaggenau (DE)
(74) Vertreter: Ter Meer Steinmeister & Partner
(86) Internationale Anmeldenummer: PCT/EP2018/078430
(87) Internationale Veröffentlichungsnummer: WO 2019/096529

(56) Entgegenhaltungen:
- DE-A1-102015 015 330
- DE-A1-102016 106 648
- DE-B3-102016 001 661

## Beschreibung

Die vorliegende Offenbarung betrifft ein Laserbearbeitungssystem, insbesondere ein System zur Materialbearbeitung mittels eines Laserstrahls, wie etwa ein Laserbearbeitungskopf zum Laserschweißen oder Laserschneiden, und ein Verfahren zur Laserbearbeitung. Die vorliegende Offenbarung betrifft insbesondere eine Nahtvermessung und Nahtverfolgung, z.B. mittels optischer Kohärenztomographie.

### Stand der Technik

Bei der Materialbearbeitung mittels eines Laserstrahls, wie beispielsweise Laserschweißen oder Laserschneiden, wird der von einer Laserlichtquelle, beispielsweise dem Ende einer Laserleitfaser, austretende Laserstrahl mit Hilfe einer Strahlführungs- und Fokussierungsoptik auf das zu bearbeitende Werkstück fokussiert. Standardmäßig wird ein Laserbearbeitungskopf mit einer Kollimatoroptik und einer Fokussierungsoptik verwendet, wobei das Laserlicht über eine Lichtleitfaser, auch als Laserquelle bezeichnet, zugeführt wird. Das Laserlicht tritt in einer Vorrichtung zur Materialbearbeitung mittels Laser, z.B. in einem Laserbearbeitungskopf, durch eine Vielzahl von optischen Elementen, wie z.B. Linsen, hindurch.

Bei vielen Schweißprozessen ist es notwendig, dass der Auftreffpunkt des Bearbeitungslaserstrahls für einen stabilen Prozess sehr genau mit dem Nahtverlauf der beiden Fügepartner zusammenfällt. Um dies zu erreichen, kann während des Schweißprozesses durchgehend die Position der Naht ermittelt werden, so dass der Laser mit Hilfe einer Scannereinrichtung immer auf diese Nahtposition nachgeführt werden kann. Bekannte technische Lösungen zur Ermittlung der Nahtposition bei einem Schweißprozess beruhen jedoch zumeist auf der Projektion von Laserlinien auf das Bauteil senkrecht zum Nahtverlauf und Auswertung dieser Laserlinie mit Hilfe einer Kamera.

Nachteil bei solchen Lichtschnittverfahren ist, dass die Ausrichtung der Laserlinie im Verhältnis zur Bearbeitungsoptik fest vorgegeben ist und dieses Verfahren somit nur für eine für einen bestimmten Prozess fest vorgegebene Schweißrichtung funktioniert. Anders gesagt ist die Ermittlung des Nahtverlaufs nicht richtungsunabhängig. Ein möglicher Ausweg beim Lichtschnittverfahren ist das Mitdrehen der gesamten Optik um dem Nahtverlauf zu folgen, was jedoch selbst bei Robotergeführten Prozessen nur begrenzt möglich ist.

In DE 10 2009 057 209 B4 ist eine Vorrichtung zur Materialbearbeitung mittels Laser mit einer durch eine Führungsmaschine relativ zum zu bearbeitenden Werkstück beweglichen Scanner-Optik. Die Vorrichtung umfasst einen Projektor, der dazu dient, Messlicht in Form von Messstrukturen auf das zu bearbeitende Werkstück zu projizieren, und einen Bildsensor, der sensitiv im Wellenlängenbereich des vom Projektor emittierten Messlichts ist. Der Projektor und der Bildsensor sind mit der Scanner-Optik verbunden und werden folglich beim Betrieb der Vorrichtung mit der Scanner-Optik mitbewegt. Somit ist eine richtungsunabhängige Vermessung nicht möglich.

DE 10 2015 015 330 A1, stellt die Basis für den Oberbegriff der unabhängigen Ansprüche dar, und offenbart eine Vorrichtung und ein Verfahren zum Überwachen eines mit einem oszillierenden Bearbeitungsstrahls ausgeführten Bearbeitungsprozesses unter Verwendung eines OCT-Messstrahls.

### Offenbarung der Erfindung

Es ist eine Aufgabe der vorliegenden Offenbarung, ein Laserbearbeitungssystem, insbesondere ein System zur Materialbearbeitung mittels eines Laserstrahls, wie etwa ein Laserbearbeitungskopf oder ein System zum Laserschweißen, und ein Verfahren zur Laserbearbeitung bereitzustellen, die eine präzise Nahtverfolgung unabhängig von einer Bearbeitungsrichtung erlauben.

Diese Aufgabe wird durch den Gegenstand der unabhängigen Ansprüche gelöst. Vorteilhafte Ausgestaltungen der sind in den Unteransprüchen angegeben.

Gemäß Ausführungsformen der vorliegenden Offenbarung ist ein Laserbearbeitungssystem angegeben. Das Laserbearbeitungssystem umfasst eine erste Ablenk-Optik, die eingerichtet ist, um einen Bearbeitungslaserstrahl in zwei Raumrichtungen abzulenken, eine zweite Ablenk-Optik, die eingerichtet ist, um einen Messstrahl unabhängig vom Bearbeitungslaserstrahl in zwei Raumrichtungen abzulenken, und eine Einkopplungsvorrichtung, die in einem Strahlengang des Bearbeitungslaserstrahls angeordnet ist und eingerichtet ist, um den Messstrahl in den Strahlengang des Bearbeitungslaserstrahls einzukoppeln.

Vorzugsweise umfasst die erste Ablenk-Optik zwei voneinander unabhängige erste Ablenkspiegel. Typischerweise ist die erste Ablenk-Optik für eine zweidimensionale Oszillation des Bearbeitungslaserstrahls eingerichtet, wie beispielsweise eine Bewegung entlang einer Linie, vorzugsweise entlang einer Linie senkrecht zum Nahtverlauf, eine kreisförmige Bewegung oder eine Bewegung in Form einer "8".

Vorzugsweise umfasst die zweite Ablenk-Optik zwei voneinander unabhängige zweite Ablenkspiegel. Typischerweise ist die zweite Ablenk-Optik für eine lineare Bewegung und/oder eine kreisförmige Bewegung des Messstrahls eingerichtet.

Vorzugsweise ist die zweite Ablenk-Optik eingerichtet, um den Messstrahl unabhängig von einer Vorschubrichtung des Bearbeitungslaserstrahls auf mindestens ein Werkstück, und insbesondere auf einen Fügebereich zweier Werkstücke, zu lenken.

Vorzugsweise ist die Einkopplungsvorrichtung ein Strahlteiler. Typischerweise ist die Einkopplungsvorrichtung eingerichtet, um den Bearbeitungslaserstrahl und den Messstrahl im Wesentlichen koaxial zu überlagern.

Vorzugsweise umfasst das Laserbearbeitungssystem eine Steuerung, die eingerichtet ist, um die erste Ablenk-Vorrichtung so zu steuern, dass der Bearbeitungslaserstrahl einem Nahtverlauf auf dem Werkstück folgt.

Vorzugsweise umfasst das Laserbearbeitungssystem eine Auswerteeinheit, die eingerichtet ist, um mit dem Messstrahl einen Nahtverlauf, wie etwa einen Kantenverlauf und/oder einen Schweißnahtverlauf, auf dem Werkstück zu vermessen. Die Auswerteeinheit kann einen Kantenverlauf von Fügestücken vor dem Bearbeitungslaserstrahl und/oder einen Schweißnahtverlauf nach dem Bearbeitungslaserstrahl vermessen. Hierbei kann die Auswerteeinheit insbesondere eingerichtet sein, den Nahtverlauf mittels optischer Kurzkohärenztomographie zu ermitteln.

Gemäß einem weiteren Aspekt der vorliegenden Offenbarung ist ein Verfahren zur Laserbearbeitung angegeben. Das Verfahren umfasst ein Ablenken eines Bearbeitungslaserstrahls in zwei Raumrichtungen, so dass der Bearbeitungslaserstrahl eine zweidimensionale Bewegung auf mindestens einem Werkstück ausführt, ein Ablenken eines Messstrahls in zwei Raumrichtung unabhängig vom Bearbeitungslaserstrahl, und ein Einkoppeln des Messstrahls in einen Strahlengang des Bearbeitungslaserstrahls.

Vorzugsweise führt der Bearbeitungslaserstrahl eine oszillierende Bewegung aus (2D Wobbelprozess), wie beispielsweise eine lineare Bewegung, eine kreisförmige Bewegung oder eine Bewegung in Form einer "8".

Vorzugsweise führt der Messstrahl eine lineare oder kreisförmige Bewegung am Nahtverlauf, wie an einem Kantenverlauf und/oder einem Schweißnahtverlauf, aus.

Vorzugsweise umfasst das Verfahren weiter ein Bestimmen eines Nahtverlaufs, wie beispielwiese eines Kantenverlaufs zweier zu fügenden Werkstücke, unter Verwendung des Messstrahls, und ein Folgen des Nahtverlaufs durch den Bearbeitungslaserstrahl basierend auf dem bestimmten Nahtverlauf. Vorzugsweise wird zum Bestimmen des Nahtverlaufs optische Kurzkohärenztomographie verwendet.

Bevorzugte, optionale Ausführungsformen und besondere Aspekte der Offenbarung ergeben sich aus den abhängigen Ansprüchen, den Zeichnungen und der vorliegenden Beschreibung.

Gemäß den hier beschriebenen Ausführungsformen wird bei einem Laserbearbeitungsprozess eine richtungsunabhängige Vermessung eines Nahtverlaufs auf einem Bauteil sowie eine genaue Positionierung des Laserstrahls auf die ermittelte Nahtposition ermöglicht. Ein optischer Messstrahl wird über eine eigene Aktorik geleitet und über eine Einkopplungsvorrichtung nach der Aktorik eines Bearbeitungslasers in dessen Strahlengang eingekoppelt und mit diesem überlagert. Durch diese Anordnung kann eine quasi koaxiale Vermessung der Bauteilgeometrie um die aktuelle Position des Bearbeitungslaserstrahls herum ermöglicht werden, unabhängig von der Bewegung des Bearbeitungslaserstrahls während des Bearbeitungsprozesses.

Ein weiterer Vorteil der hier beschriebenen Ausführungsformen zur Nahtfindung gegenüber der Linienprojektion beim Lichtschnittverfahren ist die erreichbare Auflösung. Die hier beschriebenen Ausführungsformen, insbesondere bei Verwendung von optischer Kohärenztomographie, bieten eine Genauigkeit für den gemessenen Abstandswert von etwa 1 µm. Mit dieser Genauigkeit können senkrechte Strukturen auf dem Bauteil wie beispielsweise die Kantenhöhe einer Kehlnaht vermessen werden. Im Vergleich dazu ist die Auflösung, die bei einem Lichtschnittverfahren erreicht werden kann, hauptsächlich durch die Qualität der Linienprojektion begrenzt. Typische Linienbreiten liegen im Bereich von etwa 20 bis 100 µm. Dadurch ist die Auflösung der Strukturerkennung durch die Auswertung der Linien auf den Kamerabildern um etwa eine Größenordnung geringer.

### Kurze Beschreibung der Zeichnungen

Ausführungsbeispiele der Offenbarung sind in den Figuren dargestellt und werden im Folgenden näher beschrieben. Es zeigen:
Figur 1 eine schematische Ansicht eines Laserbearbeitungssystems gemäß Ausführungsformen der vorliegenden Offenbarung,
Figur 2 schematische Verläufe eines Bearbeitungslaserstrahls und eines Messstrahls gemäß Ausführungsformen der vorliegenden Offenbarung,
Figur 3 Messdaten eines Linienscans eines optischen Kohärenztomographen, und
Figur 4 ein Flussdiagramm eines Verfahrens zur Laserbearbeitung gemäß Ausführungsformen der vorliegenden Offenbarung.

### Ausführungsformen der Offenbarung

Im Folgenden werden, sofern nicht anders vermerkt, für gleiche und gleichwirkende Elemente gleiche Bezugszeichen verwendet.

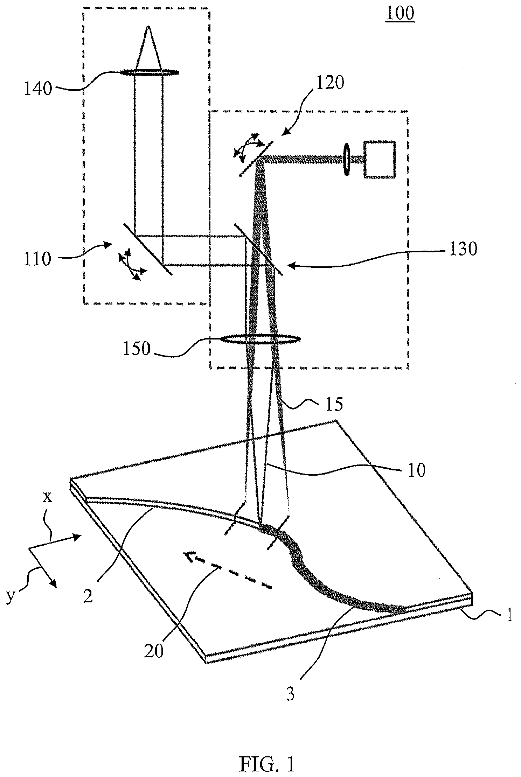

Figur 1 zeigt ein Laserbearbeitungssystem 100, und insbesondere ein System zur Materialbearbeitung mittels eines Laserstrahls, etwa zum Laserschweißen, gemäß Ausführungsformen der vorliegenden Offenbarung. Im linken Teil der Figur 1 ist schematisch der Strahlengang des Bearbeitungslasers dargestellt, und rechts der Strahlengang des optischen Sensorsystems. Gemäß Ausführungsformen kann das optische Sensorsystem ein KohärenzInterferometer sein.

Das Laserbearbeitungssystem 100 umfasst eine erste Ablenk-Optik 110, die eingerichtet ist, um einen Bearbeitungslaserstrahl 10 in zwei Raumrichtungen x, y abzulenken, eine zweite Ablenk-Optik 120, die eingerichtet ist, um einen Messstrahl 15 (Sensorstrahl) unabhängig vom Bearbeitungslaserstrahl 10 in zwei Raumrichtungen x, y abzulenken, und eine Einkopplungsvorrichtung 130, die in einem Strahlengang des Bearbeitungslaserstrahls 10 angeordnet ist und eingerichtet ist, um den Messstrahl 15 in den Strahlengang des Bearbeitungslaserstrahls 10 einzukoppeln. Vorzugsweise ist die zweite Ablenk-Optik 120 eingerichtet, um den Messstrahl 15 unabhängig von einer Vorschubrichtung oder Bearbeitungsrichtung 20 des Bearbeitungslaserstrahls 10 auf mindestens ein Werkstück 1, und insbesondere auf einen Fügebereich zweier Werkstücke zu lenken.

Gemäß Ausführungsformen der vorliegenden Offenbarung erfolgt eine Nahtfindung beispielsweise beim Schweißen von Bauteilen zur genauen Positionierung des Bearbeitungslaserstrahls 10 relativ zu dieser Naht. Der durch die zweite Ablenk-Optik 120 in zwei Richtungen ablenkbare Messstrahl 15 ermöglicht dabei die Ermittlung der Nahtposition unabhängig von der aktuellen Vorschubrichtung eines gegebenen Bearbeitungsprozesses, wie beispielsweise eines Schweißprozesses. Durch eine eigene Aktorik im Strahlengang des Bearbeitungslaserstrahls kann eine Laserstrahloszillation in zwei Richtungen ("2D Wobbelprozess") erfolgen, die unabhängig von der Bewegung des Messstrahls 15 im Messstrahlengang durchgeführt werden kann.

Gemäß Ausführungsformen umfasst das Laserbearbeitungssystem 100 (auch als "Laserbearbeitungskopf" bezeichnet) eine Laserquelle (nicht gezeigt) zur Bereitstellung des Bearbeitungslaserstrahls, wie beispielsweise eine Lichtleitfaser, sowie eine Kollimator-Optik 140, die eingerichtet ist, um den Bearbeitungslaserstrahl 10 zu kollimieren, und eine Fokussier-Optik 150, die eingerichtet ist, um den Bearbeitungslaserstrahl 10 auf wenigstens ein Werkstück 1 oder Bauteil zu fokussieren.

Das Laserbearbeitungssystem 100 oder Teile davon, wie beispielsweise ein Schweißkopf, können gemäß Ausführungsformen entlang der Bearbeitungsrichtung 20 bewegbar sein. Die Bearbeitungsrichtung 20 kann eine Schweißrichtung und/oder eine Bewegungsrichtung des Laserbearbeitungssystems 100, wie beispielsweise des Schweißkopfes, bezüglich des Werkstücks 1 sein. Insbesondere kann die Bearbeitungsrichtung 20 eine horizontale Richtung sein. Die Bearbeitungsrichtung 20 kann auch als "Vorschubrichtung" oder "Prozessrichtung" bezeichnet werden.

In einigen Ausführungsformen ist das Laserbearbeitungssystem 100 zum Schweißen eingerichtet. Das Laserbearbeitungssystem 100 kann eine Schweißnaht auf einem einzelnen Werkstück bilden, oder kann zwei Werkstücke ("Fügestücke") miteinander verschweißen, wie es im Beispiel der Figur 1 dargestellt ist. Das Laserbearbeitungssystem 100 kann mittels des Messstrahls 15 einen Nahtverlauf, wie einen Kantenverlauf 2 und/oder einen Schweißnahtverlauf 3, auf dem Werkstück 1 vermessen. Insbesondere kann der Kantenverlauf 2 von Fügestücken vor dem Bearbeitungslaserstrahl 10 und/oder der Schweißnahtverlauf 3 nach dem Bearbeitungslaserstrahl 10 vermessen werden. Anders gesagt kann der Nahtverlauf mittels des Messstrahls 15 im Vorlauf und/oder im Nachlauf des Bearbeitungslaserstrahls 10 vermessen oder bestimmt werden.

Vorzugsweise umfasst das Laserbearbeitungssystem 100 eine Auswerteeinheit, die eingerichtet ist, um mit dem Messstrahl 15 den Nahtverlauf, wie den Kantenverlauf 2 und/oder den Schweißnahtverlauf 3, auf dem Werkstück zu vermessen. Die Auswerteeinheit kann einen Kantenverlauf von Fügestücken bezüglich der Bearbeitungsrichtung 20 vor dem Bearbeitungslaserstrahl 10 und/oder einen Schweißnahtverlauf nach dem Bearbeitungslaserstrahl 10 vermessen oder bestimmen. Die Auswerteeinheit kann beispielsweise in einem optischen Kohärenztomographen enthalten sein und den reflektierten Messstrahl auswerten, um den Nahtverlauf zu bestimmen.

Typischerweise umfasst das Laserbearbeitungssystem 100 eine Steuerung, die eingerichtet ist, um die erste Ablenk-Vorrichtung 110 so zu steuern, dass der Bearbeitungslaserstrahl 10 dem Nahtverlauf auf dem Werkstück folgt. Die Steuerung kann mit der Auswerteeinheit verbunden sein und von der Auswerteeinheit Daten bezüglich des Nahtverlaufs erhalten. Die Steuerung kann die erste Ablenk-Vorrichtung 110 basierend auf diesen Daten so steuern, dass der Bearbeitungslaserstrahl 10 dem Nahtverlauf auf dem Werkstück folgt.

Das Laserbearbeitungssystem 100 ist eingerichtet, um den Bearbeitungslaserstrahl 10 und den Messstrahl 15 in zwei Raumrichtungen x, y abzulenken. Anders gesagt sind für jeden der beiden Strahlen zwei Freiheitsgrade bereitgestellt. Die zwei Raumrichtungen x, y können Richtungen des Kartesischen Koordinatensystems sein, wie beispielsweise die X-Richtung und die Y-Richtung. Die zwei Raumrichtungen können orthogonal zueinander sein und eine Ebene aufspannen. Das Koordinatensystem kann bezüglich des Werkstücks definiert sein, und kann insbesondere bezüglich des Werkstücks fest bzw. stationär sein. Alternativ kann das Koordinatensystem bezüglich des sich in die Bearbeitungsrichtung 20 bewegenden Teils des Laserbearbeitungssystems 100, wie beispielsweise des Schweißkopfes definiert sein, und kann insbesondere bezüglich des Schweißkopfes fest bzw. stationär sein.

Vorzugsweise umfasst die erste Ablenk-Optik 110 wenigstens einen ersten Ablenkspiegel, und insbesondere zwei voneinander unabhängige erste Ablenkspiegel. Die unabhängigen ersten Ablenkspiegel können um eine jeweilige Rotationsachse drehbar gelagert sein, um den Bearbeitungslaserstrahl 10 in die zwei Raumrichtungen abzulenken. Die Rotationsachsen können zueinander senkrecht sein und die zwei Freiheitsgrade bereitstellen, durch die der Bearbeitungslaserstrahl 10 zweidimensional abgelenkt werden kann.

Die Laseroptik verfügt damit über eine Aktorik, wie beispielsweise eine Scanner-Optik, bestehend aus zwei unabhängigen Scanspiegeln, durch die der Bearbeitungslaserstrahl 10 in zwei Richtungen auf dem Bauteil ausgelenkt werden kann. Dadurch ist eine genaue Positionierung des Bearbeitungslaserstrahls 10 auf dem Bauteil in zwei Raumrichtungen möglich, um dem Nahtverlauf bei einem Schweißprozess, beispielsweise einer Kehlnaht, zu folgen.

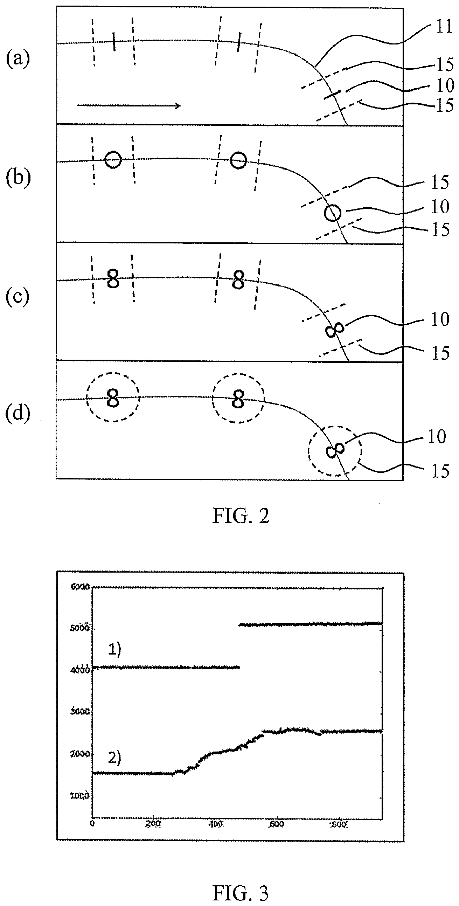

Gemäß Ausführungsformen ist die erste Ablenk-Optik 110 für eine zweidimensionale Oszillation des Bearbeitungslaserstrahls 100 eingerichtet. Insbesondere kann der Bearbeitungslaserstrahl 10 während des Prozesses in zwei Richtungen oszillieren, um gezielt den Einflussbereich des Bearbeitungslaserstrahls 10 auf dem Bauteil zu vergrößern und dadurch eine stabilere Nahtanbindung zu erreichen. Bei einem solchen 2D Wobbelprozess kann der Bearbeitungslaserstrahl 10 auf einer bestimmten zweidimensionalen Scanfigur auf dem Bauteil ausgelenkt werden, die beispielsweise aus einer Linie, einem Kreis (Figur 2(a)) oder aus der Form einer 8 (Figuren 2(b) und (c)) besteht. Typischerweise erfolgt die Oszillation mit einer Frequenz im Bereich von etwa 50 bis 1000 Hz, und vorzugsweise mit einer Frequenz im Bereich von etwa 100 bis 800 Hz.

Durch eine hochfrequente Bewegung des Bearbeitungslaserstrahls 10 auf einer zweidimensionalen Figur können Prozessgrößen wie Lasergeschwindigkeit, Einschweißtiefe und Nahtbreite über die Amplitude sowie die Frequenz der Bewegung gezielt eingestellt werden. So kann beispielsweise für eine gegebene Nahtgeometrie durch Anpassen der Amplitude der Laseroszillation der Einflussbereich des Lasers vergrößert und dadurch eine bessere Spaltüberbrückbarkeit erreicht werden. Des Weiteren kann für eine Mischverbindung zweier verschiedener Materialien, wie Kupfer und Aluminium, durch eine Wahl von Amplitude und Frequenz das Durchmischungsverhältnis in der Schmelze gezielt eingestellt werden.

In einigen Ausführungsformen umfasst die zweite Ablenk-Optik 120 wenigstens einen zweiten Ablenkspiegel, und insbesondere zwei voneinander unabhängige zweite Ablenkspiegel. Die unabhängigen zweiten Ablenkspiegel können um eine jeweilige Rotationsachse drehbar gelagert sein, um den Messstrahl 15 in die zwei Raumrichtungen abzulenken. Die Rotationsachsen können zueinander senkrecht sein und die zwei Freiheitsgrade bereitstellen, durch die der Messstrahl 15 zweidimensional abgelenkt werden kann. Typischerweise ist die zweite Ablenk-Optik 120 für eine lineare Bewegung und/oder eine kreisförmige Bewegung des Messstrahls eingerichtet, wie es unter Bezugnahme auf die Figur 2 näher erläutert ist.

Gemäß Ausführungsformen der vorliegenden Offenbarung ist die Einkopplungsvorrichtung 130 ein Strahlteiler. Typischerweise ist die Einkopplungsvorrichtung 130 eingerichtet, um den Bearbeitungslaserstrahl 10 und den Messstrahl 15 im Wesentlichen koaxial zu überlagern. Die Einkopplungsvorrichtung 130 kann der Fokussier-Optik 150 vorgelagert sein, so dass der Bearbeitungslaserstrahl 10 und der Messstrahl 15 beide durch die Fokussier-Optik 150 hindurchlaufen.

Gemäß den hier beschriebenen Ausführungsformen wird das Messlicht des Sensorsystems in den Strahlengang des Bearbeitungslasers eingekoppelt, wobei die Position des Messstrahls 15 auf dem Bauteil über eine eigene Aktorik oder Scannereinheit verfahren werden kann. Das Sensorprinzip zur Abstandsmessung kann beispielsweise auf der optischen Kurzkohärenz-Interferometrie (OCT) beruhen. Die Einkopplung des Messstrahls 15 kann über einen Strahlteiler geschehen, der sich im Strahlengang des heißen Laserstrahls nach der Aktorik des Bearbeitungslasers befindet. Durch diese Anordnung wird eine quasi koaxiale Überlagerung des Messstrahls 15 und des Bearbeitungslaserstrahls 10 erreicht, wobei jeder der beiden Strahlen unabhängig voneinander durch eine eigene Aktorik in zwei Richtungen abgelenkt werden kann. Ein wesentlicher Vorteil besteht darin, dass mit dem Messstrahl 15 die Bauteilgeometrie um die aktuelle Position des Bearbeitungslaserstrahls 10 herum vermessen werden kann, unabhängig von der Bewegung des Bearbeitungslaserstrahls 10 während des Prozesses.

So kann der Messstrahl 15 beispielsweise wiederholt zunächst entlang einer Linie bewegt werden, die sich in Schweißrichtung vor der Laserposition befindet, um die genaue Position der Schweißnaht zu detektieren und einzustellen. Anschließend kann der Messstrahl 15 beispielsweise wiederholt entlang einer Linie bewegt werden, die sich in Schweißrichtung nach der Laserposition befindet, um die Nahtgeometrie zu vermessen (siehe Figuren 1 und 2(a) und (b)). Eine weitere mögliche Bewegung des Messstrahls 15 auf dem Bauteil ist das wiederholte Abfahren einer Kreisfigur, wodurch ebenfalls eine Nahtdetektion im Vorlauf und eine Überwachung des Nahtprofils der fertigen Naht im Nachlauf gegeben ist (siehe Figur 2(c)).

Neben der genauen Positionierung des Laserstrahls auf den Nahtverlauf einer Verbindung kann es außerdem für die Qualität des Schweißprozesses sowie die Stabilität der Verbindung von Vorteil sein, wenn der Laserstrahl um die zuvor ermittelte Nahtposition herum eine oszillierende Bewegung, einen sogenannten Wobbelprozess, ausführt. Beispielsweise kann nur der Mittelpunkt dieser oszillierenden Bewegung mit der Nahtposition zusammenfallen, während der Laser hochfrequent um diesen Mittelpunkt herumbewegt wird. Die Bewegung kann dabei je nach Nahtgeometrie und dem Material der Bauteile auf einer linearen Bahn senkrecht zur Naht oder auch auf einer vorgegebenen zweidimensionalen Figur, wie beispielsweise einem Kreis oder einer 8, erfolgen. Mit den hier beschriebenen Ausführungsformen kann somit eine hochfrequente Laserstrahloszillation entlang einer zweidimensionalen Scanfigur erfolgen, deren Position sehr genau dem Verlauf einer Schweißnaht folgt, unabhängig von der Richtung dieser Naht auf dem Bauteil.

Figur 2 zeigt schematische Verläufe eines Bearbeitungslaserstrahls 10 und eines Messstrahls 15 gemäß Ausführungsformen der vorliegenden Offenbarung. Insbesondere sind verschiedene Scanfiguren des Messstrahls 15 zur Nahtfindung und Nahtqualitätsüberwachung bei gleichzeitiger hochfrequenter Laseroszillation des Bearbeitungslasers (2D Wobbelprozess) gezeigt. Der Pfeil gibt die Vorschubrichtung des Schweißprozesses entlang eines gekrümmten Nahtverlaufs 11 an. Es sind jeweils drei zeitlich aufeinanderfolgende geschlossene ScanFiguren für den Messlaser und den Bearbeitungslaser entlang der Schweißnaht dargestellt.

Durch das schnelle Abscannen der Oberfläche mit dem Messstrahl 15 kann ein Höhenprofil entlang der Scanfiguren erstellt werden. Durch die Linie vor dem Laserstrahl erhält man die Position der Naht und durch das Scannen einer Linie nach dem Laserstrahl das Höhenprofil der fertigen Schweißraupe. Gleichzeitig kann der Bearbeitungslaserstrahl 10 einen hochfrequenten zweidimensionalen Wobbelprozess entlang einer Linie, die z.B. senkrecht auf dem Nahtverlauf steht, ausführen (Figur 2(a)). Eine andere Möglichkeit für die Scanfigur des Bearbeitungslaserstrahls 10 ist eine Kreisfigur oder die Form einer 8 (Figuren 2(b) und 2(c)). Eine Alternative für die Scanfigur des Messstrahls 15 ist ein Kreis der, ebenso wie die beiden Linien im Vorlauf und im Nachlauf, die Bereiche der Nahtfindung vor dem Laser und der Nahtqualität nach dem Laser enthält (Figur 2(d)). Selbstverständlich können die Scanfiguren des Messstrahls 15 und die Scanfiguren des Bearbeitungsstrahls 10 beliebig miteinander kombiniert werden. Auch können andere Formen als eine gerade Linie oder als eine Figur in Form eines Kreises oder einer 8 verwendet werden.

Ein Vorteil einer Kreisfigur besteht darin, dass die Aktorik zur Ablenkung des Messstrahls 15 bzw. des Bearbeitungsstrahls 10 weniger abrupte Abbrems- und Beschleunigungsbewegungen durchführen muss und somit eine höhere Wiederholfrequenz der Figur erreicht werden kann. Aus demselben Grund kann die Figur einer 8 als Scanfigur für den Bearbeitungsstrahl 10 vorteilhaft sein. Die spezifischen Anforderungen an einen gegebenen Prozess, wie z.B. die Nahtgeometrie, der genaue Nahtverlauf oder auch die Vorschubgeschwindigkeit, können darüber entscheiden, ob ein Linienscan oder ein Kreisscan eingesetzt wird.

Ein weiterer Vorteil beim Scannen des Messstrahls 15 auf einem Kreis besteht darin, dass der Verlauf der Naht im Vorfeld zur eigentlichen Bearbeitung nicht bekannt sein muss. Die beiden Linien im Vor- und Nachlauf sollten für eine Messung immer senkrecht zur Naht ausgerichtet sein. Dafür kann die Information des Nahtverlaufs an die Ansteuerungssoftware für die Aktorik des Messstrahls weitergegeben werden, damit die Linien während des Prozesses immer senkrecht zur aktuellen Nahtrichtung ausgerichtet werden können. Bei einem Kreisscan entfällt eine Ausrichtung der Scanfigur, da für jede Nahtrichtung immer ein bestimmtes Segment des Kreises senkrecht zur Naht verläuft, sowohl vor als auch hinter dem Auftreffpunkt des Lasers.

Figur 3 zeigt Messdaten, die mit einem Optische Kurzkohärenztomographie (OCT) System für eine Kehlnahtkonfiguration für einen Linienscan bestehend aus einer Linie im Vorlauf und einer Linie im Nachlauf aufgenommen wurden. Die gezeigten Daten sind OCT Messdaten eines Linienscans durch eine Bearbeitungsoptik für Schweißprozesse bei der Schweißung einer Aluminium-Kehlnaht-Verbindung. Auf der Y-Achse sind die Abstandwerte der OCT Messung in Mikrometern und auf der X-Achse die Position auf dem Bauteil (Einheit beliebig) aufgetragen. Durch die Messdaten der Linie im Bereich vor dem Laser kann die Höhe sowie die genaue Position der Kehlnaht bestimmt werden (siehe Fig. 3 (1)). Aus den Messdaten der Linie im Bereich nach dem Laser kann das Profil der fertig geschweißten Naht und deren Qualität überwacht werden (siehe Fig. 3 (2)).

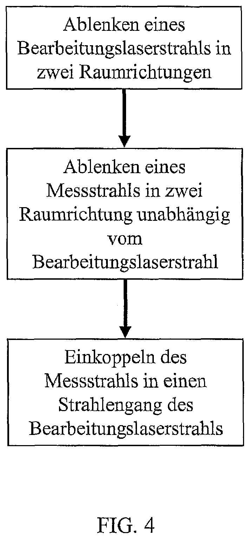

Figur 4 zeigt ein Flussdiagramm eines Verfahrens zur Laserbearbeitung gemäß Ausführungsformen der vorliegenden Offenbarung. Das Verfahren kann die unter Bezugnahme auf die Figuren 1 bis 3 beschriebenen Aspekte umfassen.

Das Verfahren umfasst ein Ablenken eines Bearbeitungslaserstrahls in zwei Raumrichtung, so dass der Bearbeitungslaserstrahl eine zweidimensionale Bewegung auf mindestens einem Werkstück ausführt, ein Ablenken eines Messstrahls in zwei Raumrichtung unabhängig vom Bearbeitungslaserstrahl, und ein Einkoppeln des Messstrahls in einen Strahlengang des Bearbeitungslaserstrahls. Vorzugsweise führt der Bearbeitungslaserstrahl eine oszillierende Bewegung aus ("2D Wobbelprozess"). Der Messstrahl kann eine lineare oder kreisförmige Bewegung am Nahtverlauf, wie einen Kantenverlauf und/oder einen Schweißnahtverlauf, ausführen, wie es beispielsweise in Figur 2 dargestellt ist. Typischerweise umfasst das Verfahren weiter ein Bestimmen eines Nahtverlaufs unter Verwendung des Messstrahls beispielsweise im Vorlauf des Bearbeitungslaserstrahls, und ein Folgen des Nahtverlaufs durch den Bearbeitungslaserstrahl basierend auf dem bestimmten Nahtverlauf.

Gemäß den hier beschriebenen Ausführungsformen werden zwei voneinander unabhängige Ablenk-Optiken verwendet, um den Bearbeitungslaserstrahl und den Messstrahl jeweils zweidimensional auszulenken. Der Messstrahl wird in den Strahlengang des Bearbeitungslaserstrahls eingekoppelt und mit dem Bearbeitungslaserstrahl im Wesentlichen koaxial überlagert, um beispielswiese eine optische Kohärenztomographie durchzuführen. Damit kann eine richtungsunabhängige Nahtfindung beispielsweise in einem 2D Wobbelprozess erreicht werden. Insbesondere kann die Nahtfindung unabhängig von einer Bearbeitungsrichtung des Bearbeitungslaserstrahls erfolgen.

## Patentansprüche

1. Ein Laserbearbeitungssystem (100), umfassend:
eine erste Ablenk-Optik (110), die eingerichtet ist, um einen Bearbeitungslaserstrahl (10) in zwei Raumrichtungen (x, y) abzulenken;
eine zweite Ablenk-Optik (120), die eingerichtet ist, um einen Messstrahl (15) unabhängig vom Bearbeitungslaserstrahl (10) in zwei Raumrichtungen (x, y) abzulenken; und
eine Einkopplungsvorrichtung (130), die eingerichtet ist, um den Messstrahl (15) in den Strahlengang des Bearbeitungslaserstrahls (10) einzukoppeln,
**dadurch gekennzeichnet, dass** die Einkopplungsvorrichtung (130) im Strahlengang des Bearbeitungslaserstrahls (10) nach der ersten Ablenk-Optik (110) angeordnet ist.

2. Das Laserbearbeitungssystem (100) nach Anspruch 1, wobei die erste Ablenk-Optik (110) zwei voneinander unabhängige erste Ablenkspiegel umfasst.

3. Das Laserbearbeitungssystem (100) nach Anspruch 1 oder 2, wobei die erste Ablenk-Optik (110) für eine zweidimensionale Oszillation des Bearbeitungslaserstrahls (10) eingerichtet ist.

4. Das Laserbearbeitungssystem (100) nach einem der Ansprüche 1 bis 3, wobei die zweite Ablenk-Optik (120) zwei voneinander unabhängige zweite Ablenkspiegel umfasst.

5. Das Laserbearbeitungssystem (100) nach einem der Ansprüche 1 bis 4, wobei die zweite Ablenk-Optik (120) für eine lineare oder kreisförmige Bewegung des Messstrahls (15) eingerichtet ist.

6. Das Laserbearbeitungssystem (100) nach einem der Ansprüche 1 bis 5, wobei die zweite Ablenk-Optik (120) eingerichtet ist, um den Messstrahl (15) unabhängig von einer Vorschubrichtung (20) des Bearbeitungslaserstrahls (10) auf mindestens ein Werkstück (1) zu lenken.

7. Das Laserbearbeitungssystem (100) nach einem der Ansprüche 1 bis 6, wobei die Einkopplungsvorrichtung (130) ein Strahlteiler ist.

8. Das Laserbearbeitungssystem (100) nach einem der Ansprüche 1 bis 7, wobei die Einkopplungsvorrichtung (130) eingerichtet ist, um den Bearbeitungslaserstrahl (10) und den Messstrahl (15) koaxial zu überlagern.

9. Das Laserbearbeitungssystem (100) nach einem der Ansprüche 1 bis 8, weiter umfassend eine Auswerteeinheit, die eingerichtet ist, um mit dem Messstrahl (150) einen Nahterlauf auf einem Werkstück (1) zu bestimmen.

10. Das Laserbearbeitungssystem (100) nach einem der Ansprüche 1 bis 9, weiter umfassend eine Steuerung, die eingerichtet ist, um die erste Ablenk-Optik (110) so zu steuern, dass der Bearbeitungslaserstrahl (10) einem Nahtverlauf auf einem Werkstück (1) folgt.

11. Das Laserbearbeitungssystem (100) nach Anspruch 10, wobei die Auswerteeinheit ein optisches Kohärenzinterferometer umfasst.

12. Ein Verfahren zur Laserbearbeitung, umfassend:
Ablenken eines Bearbeitungslaserstrahls (10) in zwei Raumrichtung (x, y) mit einer ersten Ablenk-Optik (110), so dass der Bearbeitungslaserstrahl (10) eine zweidimensionale Bewegung auf mindestens einem Werkstück (1) ausführt;
Ablenken eines Messstrahls (15) in zwei Raumrichtung (x, y) unabhängig vom Bearbeitungslaserstrahl (10) mit einer zweiten Ablenk-Optik (120); und
Einkoppeln des Messstrahls (15) in einen Strahlengang des Bearbeitungslaserstrahls (10),
**dadurch gekennzeichnet, dass** der Messstrahl durch eine im Strahlengang des Bearbeitungslaserstrahls (10) nach der ersten Ablenk-Optik (110) angeordnete Einkopplungsvorrichtung (130) eingekoppelt wird.

13. Das Verfahren nach Anspruch 12, wobei der Bearbeitungslaserstrahl (10) eine oszillierende Bewegung ausführt.

14. Das Verfahren nach Anspruch 12 oder 13, wobei der Messstrahl (15) eine lineare oder kreisförmige Bewegung ausführt.

15. Das Verfahren nach einem der Ansprüche 12 bis 14, weiter umfassend:
Bestimmen eines Nahtverlaufs unter Verwendung des Messstrahls (15) durch optische Kohärenztomographie; und
Folgen des Nahtverlaufs durch den Bearbeitungslaserstrahl (10) basierend auf dem bestimmten Nahtverlauf.

## Claims

1. A laser machining system (100), comprising:
first deflection optics (110), which are designed for deflecting a machining laser beam (10) in two directions in space (x, y);
second deflection optics (120), which are designed for deflecting a measuring beam (15) in two directions in space (x, y) independently of the machining laser beam (10); and
a coupling device (130), which is designed for coupling the measuring beam (15) into the beam path of the machining laser beam (10),
**characterised in that** the coupling device (130) is arranged in the beam path of the machining laser beam (10) after the first deflection optics (110).

2. The laser machining system (100) according to claim 1, wherein the first deflection optics (110) comprise two independent first deflection mirrors.

3. The laser machining system (100) according to claim 1 or 2, wherein the first deflection optics (110) are designed for a two-dimensional oscillation of the machining laser beam (10).

4. The laser machining system (100) according to one of claims 1-3, wherein the second deflection optics (120) comprise two independent second deflection mirrors.

5. The laser machining system (100) according to one of claims 1-4, wherein the second deflection optics (120) are designed for a linear or circular motion of the measuring beam (15).

6. The laser machining system (100) according to one of claims 1-5, wherein the second deflection optics (120) are designed for deflecting the measuring beam (15) on at least one workpiece (1) independently of an advance direction (20) of the machining laser beam (10).

7. The laser machining system (100) according to one of claims 1-6, wherein the coupling device (130) is a beam splitter.

8. The laser machining system (100) according to one of claims 1-7, wherein the coupling device (130) is designed for superimposing the machining laser beam (10) and the measuring beam (15) coaxially.

9. The laser machining system (100) according to one of claims 1-8, further comprising an evaluation unit that is designed for determining a seam progression on a workpiece (1) with the measuring beam (150).

10. The laser machining system (100) according to one of claims 1-9, further comprising a control unit that is designed for controlling the first deflection optics (110) in such a way that the machining laser beam (10) tracks a seam progression on a workpiece (1).

11. The laser machining system (100) according to claim 10, wherein the evaluation unit comprises an optical coherence interferometer.

12. A laser machining method, comprising:
deflecting a machining laser beam (10) in two directions in space (x, y) with first deflection optics (110) such that the machining laser beam (10) carries out a two-dimensional motion on at least one workpiece (1);
deflecting a measuring beam (15) in two directions in space (x, y) independently of the machining laser beam (10) with second deflection optics (120); and
coupling the measuring beam (15) into a beam path of the machining laser beam (10),
**characterised in that** the measuring beam is coupled through a coupling device (130) arranged after the first deflection optics (110) in the beam path of the machining laser beam (10).

13. The method according to claim 12, wherein the machining laser beam (10) carries out an oscillating motion.

14. The method according to claim 12 or 13, wherein the measuring beam (15) carries out a linear or circular motion.

15. The method according to one of claims 12-14, further comprising:
determining a seam progression by using the measuring beam (15) by means of optical coherence tomography; and
tracking the seam progression by means of the machining laser beam (10) based on the determined seam progression.

## Revendications

1. Système d'usinage au laser (100), comportant :
une première optique de déviation (110) qui est conçue pour dévier un faisceau laser d'usinage (10) dans deux directions spatiales (x, y) ;
une seconde optique de déviation (120) qui est conçue pour dévier un faisceau de mesure (15) dans deux directions spatiales (x, y) indépendamment du faisceau laser d'usinage (10) ; et
un dispositif de couplage (130) qui est conçu pour coupler le faisceau de mesure (15) dans le trajet de faisceau du faisceau laser d'usinage (10),
**caractérisé en ce que** le dispositif de couplage (130) est agencé dans le trajet de faisceau du faisceau laser d'usinage (10) après la première optique de déviation (110).

2. Système d'usinage au laser (100) selon la revendication 1, dans lequel la première optique de déviation (110) comporte deux premiers miroirs déflecteurs indépendants l'un de l'autre.

3. Système d'usinage au laser (100) selon la revendication 1 ou 2, dans lequel la première optique de déviation (110) est conçue pour une oscillation bidimensionnelle du faisceau laser d'usinage (10).

4. Système d'usinage au laser (100) selon l'une des revendications 1 à 3, dans lequel la seconde optique de déviation (120) comporte deux seconds miroirs déflecteurs indépendants l'un de l'autre.

5. Système d'usinage au laser (100) selon l'une des revendications 1 à 4, dans lequel la seconde optique de déviation (120) est conçue pour un mouvement linéaire ou circulaire du faisceau de mesure (15).

6. Système d'usinage au laser (100) selon l'une des revendications 1 à 5, dans lequel la seconde optique de déviation (120) est conçue pour diriger le faisceau de mesure (15) sur au moins une pièce (1) indépendamment d'une direction d'avance (20) du faisceau laser d'usinage (10).

7. Système d'usinage au laser (100) selon l'une des revendications 1 à 6, dans lequel le dispositif de couplage (130) est un séparateur de faisceau.

8. Système d'usinage au laser (100) selon l'une des revendications 1 à 7, dans lequel le dispositif de couplage (130) est conçu pour superposer coaxialement le faisceau laser d'usinage (10) et le faisceau de mesure (15).

9. Système d'usinage au laser (100) selon l'une des revendications 1 à 8, comportant en outre une unité d'évaluation qui est conçue pour déterminer un tracé de soudure sur une pièce (1) avec le faisceau de mesure (150).

10. Système d'usinage au laser (100) selon l'une des revendications 1 à 9, comportant en outre une commande qui est conçue pour commander la première optique de déviation (110) de sorte que le faisceau laser d'usinage (10) suit un tracé de soudure sur une pièce (1).

11. Système d'usinage au laser (100) selon la revendication 10, dans lequel l'unité d'évaluation comporte un interféromètre à cohérence optique.

12. Procédé d'usinage au laser, comportant les étapes consistant à :
dévier un faisceau laser d'usinage (10) dans deux directions spatiales (x, y) avec une première optique de déviation (110), de sorte que le faisceau laser d'usinage (10) réalise un mouvement bidimensionnel sur au moins une pièce (1) ;
dévier un faisceau de mesure (15) dans deux directions spatiales (x, y) indépendamment du faisceau laser d'usinage (10) avec une seconde optique de déviation (120) ; et
coupler le faisceau de mesure (15) dans un trajet de faisceau du faisceau laser d'usinage (10),
**caractérisé en ce que** le faisceau de mesure est couplé par un dispositif de couplage (130) agencé dans le trajet de faisceau du faisceau laser d'usinage (10) après la première optique de déviation (110).

13. Procédé selon la revendication 12, dans lequel le faisceau laser d'usinage (10) réalise un mouvement oscillant.

14. Procédé selon la revendication 12 ou 13, dans lequel le faisceau de mesure (15) réalise un mouvement linéaire ou circulaire.

15. Procédé selon l'une des revendications 12 à 14, comportant en outre les étapes consistant à :
déterminer un tracé de soudure par tomographie en cohérence optique en utilisant le faisceau de mesure (15) ; et
suivre le tracé de soudure au moyen du faisceau laser d'usinage (10) sur la base du tracé de soudure déterminé.
